# EUROPÄISCHE PATENTANMELDUNG

(11) **EP 4 574 408 A1**
(43) Veröffentlichungstag der Anmeldung: **25.06.2025**
(21) Anmeldenummer: 24222069.7
(22) Anmeldetag: 20.12.2024
(51) Int. Cl.: B29D 30/06

(54) **VORRICHTUNG ZUR VULKANISATION EINES FAHRZEUGREIFENS UND VERFAHREN ZUM VULKANISIEREN EINES REIFENS IN EINER DERARTIGEN VORRICHTUNG**

(30) Priorität: 22.12.2023 DE 102023213272
(71) Anmelder: Continental Reifen Deutschland GmbH, 30175 Hannover (DE)
(72) Erfinder: Krohne, Holger, 30175 Hannover (DE); Schlinker, Arne, 30175 Hannover (DE); Popean, Radu, 30175 Hannover (DE); Voss, Constantin, 30175 Hannover (DE)
(74) Vertreter: Continental Corporation

(57) **Zusammenfassung**

Vorrichtung zur Vulkanisation eines Fahrzeugreifens mit einer eine Vulkanisationsform (2) enthaltenden Heizpresse
und mit einer Innenheizung mit einem an der Reifeninnenseite anliegenden Heizbalg (11) und einer Außenheizung, welche über Bestandteile der Vulkanisationsform (2) die Außenseite des Fahrzeugreifens (10) beheizt, wobei der Heizbalg (11) zwischen einem oberen Balgteller (13a) und einem oberen Balgklemmring (14a) sowie zwischen einem unteren Balgteller (13b) und einem unteren Balgklemmring (14b) gehalten ist,
und mit einer mit dem oberen Balgteller (13a) wirkverbundenen, einen bei eingeformtem Reifen (10) im Heizbalginneren befindlichen Abschnitt (15a) aufweisenden Kolbenstange (15) zum Betätigen des Ein- und Ausfahrens des Heizbalgs (11) in den und aus dem Reifen.

Die Innenheizung ist von zumindest einem Infrarot-Strahlungselement (16a, 16b, 16c) gebildet, welches an dem bei eingeformten Reifen im Heizbalginneren befindlichen Abschnitt (15a) der Kolbenstange (15) angeordnet ist.

## Beschreibung

Die Erfindung betrifft eine Vorrichtung zur Vulkanisation eines Fahrzeugreifens mit einer eine Vulkanisationsform enthaltenden Heizpresse
und mit einer Innenheizung mit einem an der Reifeninnenseite anliegenden Heizbalg und einer Außenheizung, welche über Bestandteile der Vulkanisationsform die Außenseite des Fahrzeugreifens beheizt, wobei der Heizbalg zwischen einem oberen Balgteller und einem oberen Balgklemmring sowie zwischen einem unteren Balgteller und einem unteren Balgklemmring gehalten ist,
und mit einer mit dem oberen Balgteller wirkverbundenen, einen bei eingeformtem Reifen im Heizbalginneren befindlichen Abschnitt aufweisenden Kolbenstange zum Betätigen des Ein- und Ausfahrens des Heizbalgs in den und aus dem Reifen. Die Erfindung betrifft ferner ein Verfahren Vulkanisieren eines Reifens in einer derartigen Vorrichtung.

Die Vulkanisation eines Fahrzeugreifens erfolgt üblicherweise in einer Heizpresse mit einer Vulkanisationsform, in welche der Reifenrohling, eingesetzt wird, der Heizbalg im Reifeninneren positioniert wird, die Vulkanisationsform geschlossen wird und der Reifenrohling unter Einwirkung von Wärme sowie Druck vulkanisiert wird. Der Heizbalg wird üblicherweise mit einem Heizmedium, etwa Heißdampf, beaufschlagt, sodass auf diese Weise dem Reifenrohling von der Innenseite her die erforderliche Vulkanisationsenergie zugeführt wird. An seiner Außenseite wird der Reifenrohling über die vorgesehenen Formgebungselemente der Vulkanisationsform erwärmt, wobei beispielsweise in der Heizpresse Heizplatten oder Heizkammern eingebaut sind, welche Wärme an die Formgebungselemente übertragen.

Im Heizbalg wird die Energie des Heißdampfes durch Kondensation in den Balg und von diesem auf den Reifen übertragen. Zunächst bilden sich an der Balginnenwand kondensierende Wassertröpfchen, die schließlich an der Balgwand von oben nach unten laufen, so wie Regentropfen an einer Fensterscheibe. Dadurch sammelt sich im unteren Bereich des Heizbalgs ein Wasserfilm und im Bereich der unteren Seitenwand entsteht ein "See". Das Wasser ist ein zusätzlicher Isolator, wodurch der beste Wärmetransport im oberen, im "top"- Bereich des Heizbalgs stattfindet, zu den hier befindlichen Reifenbereichen, wie dem oberen Wulstbereich, der oberen Seitenwand und dem oberer Schulterbereich. Im unteren Bereich des Heizbalgs, besonders in der unteren Seitenwand, gefolgt von unterem Wulstbereich und dem unteren Schulterbereich ist die Wärmeübertragung geringer. Dadurch werden bestimmte Reifenbereiche während der vorgesehenen Vulkanisationszeit zu wenig oder zu stark vernetzt, wodurch die Qualität und die Eigenschaften der vulkanisierten Reifen beeinträchtigt sein können. Dies gilt insbesondere für die Seitenwände und/oder die Reifenwülste. Darüber hinaus ergeben sich hohe Energieverluste durch den Transport des Heißdampfes durch Zuleitungen hindurch bis in das Innere des Heizbalgs während des Vulkanisationsprozesses sowie durch das Abführen des Heißdampfes aus dem Inneren des Heizbalgs nach dem Ende des Vulkanisationsvorgangs.

Die EP 3 590 695 A1 befasst sich mit dem bei herkömmlichen Innenheizungen auftretenden Problem einer ungleichmäßigen Temperaturverteilungen mit unerwünscht hohen oder unerwünscht tiefen Temperaturen in bestimmten Reifenteilen. Zur Lösung dieses Problems wird vorgeschlagen, dass der Formträger mindestens eine regelbare Heizeinheit umfasst, welche dazu ausgelegt ist, mindestens eine seitliches Formgebungselement zu beheizen.

Der Erfindung liegt die Aufgabe zugrunde, bei einer Vorrichtung der eingangs genannten Art die erwähnten Energieverluste zu vermeiden und für eine gleichmäßige und möglichst optimale Temperatur im Inneren des Heizbalgs zu sorgen.

Gelöst wird die gestellte Aufgabe erfindungsgemäß dadurch, dass die Innenheizung von zumindest einem Infrarot-Strahlungselement gebildet ist, welches an dem bei eingeformtem Reifen im Heizbalginneren befindlichen Abschnitt der Kolbenstange angeordnet ist.

Der Heizbalg wird daher gemäß der Erfindung ohne die Verwendung eines Heizmediums, wie Heißdampf, und unmittelbar von innen her derart erwärmt, dass Temperaturunterschiede zwischen dem oberen Bereich und dem unteren Bereich des Heizbalgs vermieden sind und diese Bereiche unter Sicherstellung eines qualitativ hochwertigen Reifens gleichmäßig vulkanisiert werden können. Durch das direkte Beheizen des Heizbalginneren werden Energieverluste, wie sie beispielsweise beim Ein- und Ausleiten von Heißdampf üblicherweise entstehen, vermieden.

Besonders einfach und zweckmäßig ist die Maßnahme, das Infrarot-Strahlungselement bzw. die Infrarot-Strahlungselemente am Abschnitt der Kolbenstange thermisch isoliert in einem Abstand zu diesem Abschnitt zu befestigen.

Bei einer bevorzugten Ausführung bildet ein einzelnes Infrarot-Strahlungselement, welches den Abschnitt der Kolbenstange über insbesondere zumindest 50 % der Länge des Abschnitts umgibt, die Innenheizung. Besonders vorteilhaft ist dabei eine Ausführung, bei welcher dieses Infrarot-Strahlungselement mehrere Heizzonen zur Abgabe unterschiedlicher Wärmeenergien aufweist. Sind unterschiedliche Heizzonen im Infrarot-Strahlungselement vorhanden, so können gezielt bestimmte Reifenbereiche mit mehr oder weniger Wärmeenergie versorgt werden.

Bei einer alternativen Ausführung sind mehrere am Abschnitt der Kolbenstange aufeinanderfolgende Infrarot-Strahlungselemente vorhanden, welche die Innenheizung bilden. Jedes dieser Infrarot-Strahlungselemente kann für die Abgabe einer bestimmten Strahlungswärme zur Optimierung der Innenheizung sorgen, um derart ebenfalls gezielt bestimmte Reifenbereiche mit mehr oder weniger Wärmeenergie zu beaufschlagen.

Je nachdem, welche Wärmeenergien die Innenheizung zur Verfügung stellen soll, sind verschiedene Ausführungsvarianten des Infrarot-Strahlungselementes bzw. der Infrarot-Strahlungselemente von besonderem Vorteil. Besonders geeignet sind Infrarot-Strahlungselemente, die kreiszylindrisch, spiralförmig oder ringartig gestaltet sind.

Gemäß einer weiteren ebenfalls vorteilhaften Ausführung bilden mehrere parallel zum Abschnitt der Kolbenstange und entlang des Abschnitts der Kolbenstange verlaufende stabartig gestaltete Infrarot-Strahlungselemente die Innenheizung.

Wie eingangs erwähnt, betrifft die Erfindung auch ein Verfahren zum Vulkanisieren eines Reifens in einer Vorrichtung, welche gemäß einem oder mehreren der Ansprüche 1 bis 7 ausgeführt ist. Dieses Verfahren weist folgende, aufeinanderfolgende Schritte auf:
- Einlegen des Reifens in die geöffnete Vulkanisationsform,
- Einbringen des Heizbalgs in den Reifen,
- Schließen der Vulkanisationsform,
- Befüllen des Heizbalgs mit einem Gas, beispielsweise Luft, unter Druck zum Anlegen der Außenseite des Reifens an die Innenseiten der Formteile der Vulkanisationsform,
- Inbetriebnahme der Außen- und der Innenheizung,
- Vulkanisieren des Reifens,
- Abschalten der Innenheizung,
- Öffnen der Vulkanisationsform und Entnahme des Reifens,
- Ablassen des Gases und Entnahme des Heizbalgs.

Besonders vorteilhaft ist dieses Verfahren, wenn der Heizbalg mit erwärmtem Gas befüllt wird. Diese Maßnahme erleichtert das Einformen des Reifens in die Form und reduziert die anfänglich von den Infrarot-Strahlungselementen abzugebende Wärmeleistung.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine mittige Schnittdarstellung einer Reifenvulkanisationsform im geschlossenen Zustand mit eingebrachtem Reifen,
Fig. 2 und Fig. 3 Ansichten von Ausführungsvarianten von Infrarot-Strahlungselementen.

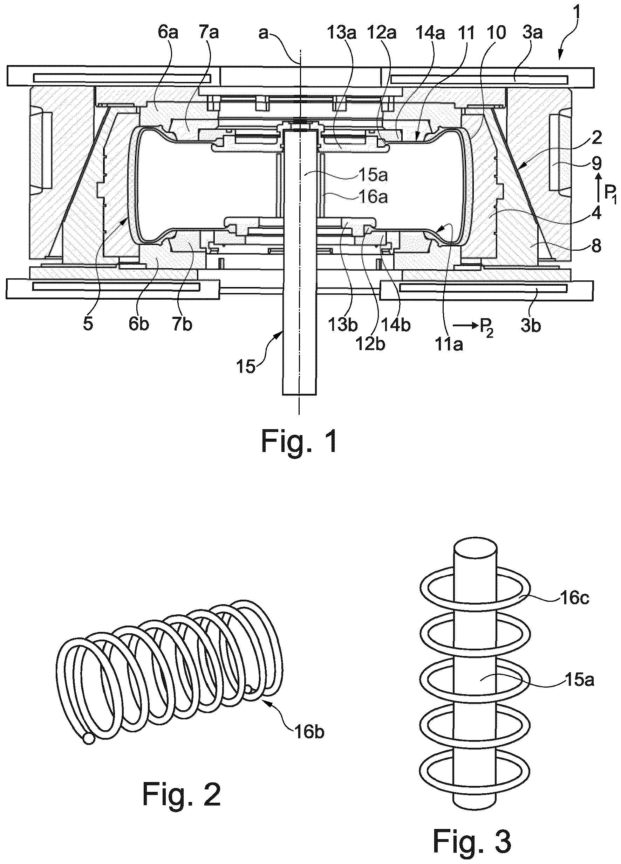

Fig. 1 zeigt Bestandteile einer Heizpresseneinheit aus einer Heizpresse 1 und einer in dieser befindlichen Vulkanisationsform 2. Die Heizpresse 1 umfasst eine obere Außenheizung 3a und eine untere Außenheizung 3b. Bestandteile der Heizpresse 1 sind zum Öffnen und Schließen in senkrechter Richtung gemäß dem Pfeil P₁ beweggbar.

Die Vulkanisationsform 2 weist einen Segmentring auf, welcher in üblicher Weise aus mehreren, beispielsweise sieben bis vierzehn, ringförmig umlaufenden Segmentschuhen 4 zusammengesetzt ist, welche forminnenseitig Profilsegmente 5 halten, die ihrerseits jene Elemente, wie Lamellen, Stege und dergleichen, zum Ausformen einer Profilierung im Laufstreifen des in Fig. 1 bereits in der Vulkanisationsform 2 befindlichen Reifens 10 aufweisen. Weitere Bestandteile der Vulkanisationsform 2 sind obere und untere Seitenwandschalen 6a, 6b und obere und untere Wulstringe 7a, 7b. Die mittige, in Fig. 1 senkrecht verlaufende Achse a der Vulkanisationsform 2 fällt mit der Rotationsachse des Reifens 10 zusammen.

Die Segmentschuhe 4 werden zum Öffnen und Schließen der Vulkanisationsform 2 radial, in Fig. 1 in Richtung des Pfeiles P₂, auseinandergefahren. Mit den Segmentschuhen 4 ist außenseitig ein Schließring 8 in Kontakt, welcher eine schräge Innenfläche aufweist, die mit gegengleich schrägen Außenflächen der Segmentschuhe 4 des Segmentringes derart zusammenwirkt, dass beim Schließen der Vulkanisationsform die Segmentschuhe 4 in Richtung des Pfeiles P₂ in Fig. 1 zusammengefahren werden und derart den Segmentring schließen.

In der oberen und in der unteren Außenheizung 3a, 3b sowie im Schließring 8 sind Heizeinheiten eingebaut sein, beispielsweise beheizbare Heizplatten oder Heizkammern 9, in welche während der Vulkanisation ein Heizmedium eingeleitet wird, insbesondere Wasserdampf, sodass auf diese Weise die Außenheizung gebildet wird, welche über die Segmentschuhe 4, die Seitenwandschalen 6a, 6b und die Wulstringe 7a, 7b der Außenseite des Reifens 10 Wärme zuführt.

In den noch rohen, unvulkanisierten Reifen 10, ist ein Heizbalg 11 eingebracht. Der Heizbalg 11 ist in an sich bekannter Weise ausgeführt und weist einen mit der Innenseite des Reifens 10 zur Anlage kommenden Balgteil 11a und Balgfüße 12a, 12b auf, wobei der eine, in Fig. 1 obere Balgfuß 12a zwischen einem oberen Balgteller 13a und einem oberen Balgklemmring 14a und der in der Fig. 1 untere Balgfuß 12b zwischen einem unteren Balgteller 13b und einem unteren Balgklemmring 14b gehalten ist. Eine entlang der Achse a der Vulkanisationsform 2 bewegbare und mit dem oberen Balgteller 13a wirkverbundene Kolbenstange 15 betätigt den Heizbalg 11 bei seinem Ein- und Ausfahren in den und aus dem Reifen 10. Das Einbringen des Heizbalgs 11 in den Reifen 10 erfolgt bei in die Vulkanisationsform 2 eingebrachtem Reifen, jedoch vor dem Schließen der Vulkanisationsform 2, sodass der Reifen 10 mitsamt eingebrachtem Heizbalg 11 in der noch geöffneten Vulkanisationsform 2 eingelegt ist. Anschließend wird die Vulkanisationsform 2 geschlossen und es wird der Heizbalg 11 innenseitig mit einem Gas, etwa Luft, ggf. erwärmte Luft, derart unter Druck befüllt, dass sich der Reifen 10 mit seiner Außenseite an die Innenseiten der Profilsegmente 5, der Seitenwandschalen 6a, 6b und der Wulstringe 7a, 7b anlegt.

Die Kolbenstange 15 weist einen Abschnitt 15a auf, der bei im Reifen befindlichem Heizbalg 11 und bei eingeformtem Reifen 10 im Reifeninneren verläuft. Auf diesem Abschnitt 15a befindet sich zumindest ein Infrarot-Strahlungselement 16a (Fig. 1), 16b (Fig. 2) oder 16c (Fig. 3). Jedes Infrarot-Strahlungselement 16a, 16b, 16c ist in einem geringen Abstand von beispielsweise 1 cm bis etwa 5 cm vom Abschnitt 15a unter Verwendung nicht dargestellter, insbesondere thermisch isolierender Abstandhalter positioniert, die vorzugsweise gleichzeitig Befestigungselemente für die Infrarot-Strahlungselement 16a, 16b, 16c am Abschnitt 15a sind. Jedes Infrarot-Strahlungselement 16a, 16b und 16c weist in bekannter Weise Kontaktelemente zur Versorgung mit elektrischer Spannung auf.

Gemäß Fig. 1 umgibt das Infrarot- Strahlungselement 16a den Abschnitt 15a der Kolbenstange 15 in kreiszylindrischer Gestalt (Mantel eines Kreiszylinders), insbesondere mittig und über zumindest 50 % der Länge des Abschnitts 15a der Kolbenstange 15. Alternativ sind auf dem Abschnitt 15a mehrere Infrarot-Strahlungselement 16a aufeinander folgend angeordnet. Bei einer weiteren Alternative weist das einteilig ausgeführte Infrarot- Strahlungselement 16a verschiedene Heizzonen auf. Diese alternativen Maßnahmen erlauben es, die Wärmeabstrahlung gezielt über das Innere des Heizbalgs 11 zu variieren, etwa um im Bereich der Wulstringe 7a, 7b eine geringere Wärmeabstrahlung einzustellen.

Bei der in Fig. 2 gezeigten Ausführungsvariante weist das Infrarot-Strahlungselement 16b die Gestalt einer Spirale auf, welche den Abschnitt 15a der Kolbenstange 15, insbesondere ebenfalls über zumindest 50 % der Länge des Abschnitts 15a der Kolbenstange 15, umläuft. Alternativ können auch bei dieser Ausführung mehrere spiralförmige Infrarot-Strahlungselemente 16b, die jeweils um einen Teilbereich des Abschnitts 15a verlaufen, vorgesehen sein.

Eine weitere Ausführungsform von Infrarot-Strahlungselementen 16c zeigt Fig. 3. Um den Abschnitt 15a der Kolbenstange 15 sind unter gegenseitigen Abständen mehrere, insbesondere eine Vielzahl von ringartig ausgeführten Infrarot-Strahlungselementen 16c angeordnet.

Bei einer weiteren gesondert nicht dargestellten Ausführung sind stabförmige Infrarot-Strahlungselemente vorgesehen, welche entlang des Abschnitts 15a und unter einem gewissen Abstand zu diesem verlaufend die Kolbenstange 15 umgeben.

Mittels einer elektronischen Regelung, die beispielsweise Werte von Temperaturmesssensoren erhält, die beispielsweise in bzw. an den Balgklemmringen 14a, 14b und/oder den Balgtellern 13a, 13b angeordnet sind, und/oder die Temperaturverläufe der Außenheizung misst, wird die elektrische Leistung der Infrarot-Strahlungselemente 16a, 16b, 16c entsprechend eingestellt und geregelt, um im Inneren des zu vulkanisierenden Reifens einen möglichst vorteilhaften und optimalen Temperaturverlauf über den Verlauf der Vulkanisation des Reifens zu erzielen.

### Bezugszeichenliste

- 1: Heizpresse
- 2: Vulkanisationsform
- 3a: obereAußenheizung
- 3b: untereAußenheizung
- 4: Segmentschuh
- 5: Profilsegment
- 6a: obereSeitenwandschale
- 6b: untereSeitenwandschale
- 7a: Wulstring
- 7b: Wulstring
- 8: Schließring
- 9: Heizkammer
- 10: Reifen
- 11: Heizbalg
- 11a: Balgteil
- 12a: obererBalgfuß
- 12b: untererBalgfuß
- 13a: obererBalgteller
- 13b: untererBalgteller
- 14a: obererBalgklemmring
- 14b: untererBalgklemmring
- 15: Kolbenstange
- 15a: Abschnitt
- 16a, 16b: Infrarot-Strahlungselement
- 16c: Infrarot-Strahlungselement
- a: Achse
- P₁, P₂: Richtungspfeile

## Patentansprüche

1. Vorrichtung zur Vulkanisation eines Fahrzeugreifens mit einer eine Vulkanisationsform (2) enthaltenden Heizpresse
und mit einer Innenheizung mit einem an der Reifeninnenseite anliegenden Heizbalg (11) und einer Außenheizung, welche über Bestandteile der Vulkanisationsform (2) die Außenseite des Fahrzeugreifens (10) beheizt, wobei der Heizbalg (11) zwischen einem oberen Balgteller (13a) und einem oberen Balgklemmring (14a) sowie zwischen einem unteren Balgteller (13b) und einem unteren Balgklemmring (14b) gehalten ist,
und mit einer mit dem oberen Balgteller (13a) wirkverbundenen, einen bei eingeformtem Reifen (10) im Heizbalginneren befindlichen Abschnitt (15a) aufweisenden Kolbenstange (15) zum Betätigen des Ein- und Ausfahrens des Heizbalgs (11) in den und aus dem Reifen,
**dadurch gekennzeichnet,**
**dass** die Innenheizung von zumindest einem Infrarot-Strahlungselement (16a, 16b, 16c) gebildet ist, welches an dem bei eingeformten Reifen im Heizbalginneren befindlichen Abschnitt (15a) der Kolbenstange (15) angeordnet ist.

2. Vorrichtung nach Anspruch 1, **dadurch gekennzeichnet, dass** das Infrarot-Strahlungselement (16a, 16b, 16c) bzw. die Infrarot-Strahlungselemente am Abschnitt (15a) der Kolbenstange (15) gegenüber diesem thermisch isoliert in einem Abstand zu diesem befestigt ist bzw. sind.

3. Vorrichtung nach Anspruch 1 oder 2, **dadurch gekennzeichnet, dass** ein einzelnes, Infrarot- Strahlungselement (16a, 16b), welches den Abschnitt (15a) der Kolbenstange (15) insbesondere über zumindest 50 % der Länge des Abschnitts (15a) umgibt, die Innenheizung bildet.

4. Vorrichtung nach Anspruch 3, **dadurch gekennzeichnet, dass** das Infrarot-Strahlungselement (16a, 16b) Heizzonen zur Abgabe unterschiedlicher Wärmeenergien aufweist.

5. Vorrichtung nach Anspruch 1 oder 2, **dadurch gekennzeichnet, dass** mehrere am Abschnitt (15a) der Kolbenstange (15) aufeinanderfolgende Infrarot-Strahlungselemente (16c) die Innenheizung bilden.

6. Vorrichtung nach einem oder mehreren der Ansprüche 1 bis 5, **dadurch gekennzeichnet, dass** das Infrarot- Strahlungselement (16a, 16b, 16c) bzw. die Infrarot-Strahlungselemente kreiszylindrisch, spiralförmig oder ringartig gestaltet ist bzw. sind.

7. Vorrichtung nach Anspruch 1 oder 2, **dadurch gekennzeichnet, dass** mehrere parallel zum und entlang des Abschnitts (15a) der Kolbenstange (15) verlaufende, stabartig gestaltete Infrarot-Strahlungselemente die Innenheizung bilden.

8. Verfahren zum Vulkanisieren eines Reifens in einer Vorrichtung, welche gemäß einem oder mehreren der Ansprüche 1 bis 7 ausgeführt ist,
mit folgenden, aufeinanderfolgenden Schritten:
- Einlegen des Reifens in die geöffnete Vulkanisationsform,
- Einbringen des Heizbalgs (11) in den Reifen,
- Schließen der Vulkanisationsform (2),
- Befüllen des Heizbalgs (11) mit einem Gas, beispielsweise Luft, unter Druck zum Anlegen der Außenseite des Reifens (10) an die Innenseiten der Formteile der Vulkanisationsform (2),
- Inbetriebnahme der Außen- und der Innenheizung,
- Vulkanisieren des Reifens,
- Abschalten der Innenheizung,
- Öffnen der Vulkanisationsform (2) und Entnahme des Reifens,
- Ablassen des Gases und Entnahme des Heizbalgs (11).

9. Verfahren nach Anspruch 8, **dadurch gekennzeichnet, dass** der Heizbalg mit erwärmtem Gas befüllt wird.
